# EUROPEAN PATENT SPECIFICATION

(11) **EP 1 851 872 B1**
(45) Date of publication and mention of the grant of the patent: **01.02.2012**
(21) Application number: 06711150.0
(22) Date of filing: 09.02.2006
(51) Int. Cl.: H04B 3/32

(54) **METHOD AND DEVICE FOR CONNECTING AN ADDITIONAL SUBSCRIBER TO A TELEPHONE EXCHANGE**
VERFAHREN UND EINRICHTUNG ZUM VERBINDEN EINES ZUSÄTZLICHEN TEILNEHMERS MIT EINER TELEFONVERMITTLUNG
PROCEDE ET DISPOSITIF PERMETTANT DE CONNECTER UN ABONNE SUPPLEMENTAIRE A UN CENTRAL TELEPHONIQUE

(30) Priority: 16.02.2005 IL 16693605
(43) Date of publication of application: 07.11.2007
(73) Proprietor: ECI Telecom Ltd., Petach-Tikva 49517 (IL)
(72) Inventor: SOURANI, Sason, 45267 Hod Hasharon (IL)
(74) Representative: Modiano, Micaela Nadia
(86) International application number: PCT/IL2006/000168
(87) International publication number: WO 2006/087700

(56) References cited:
- WO-A-99/66700
- WO-A-03/024013
- PATENT ABSTRACTS OF JAPAN vol. 011, no. 343 (E-555), 10 November 1987 (1987-11-10) & JP 62 123860 A (MATSUSHITA ELECTRIC WORKS LTD), 5 June 1987 (1987-06-05)
- GALLI S ET AL: "A FREQUENCY-DOMAIN APPROACH TO CROSSTALK IDENTIFICATION IN XDSL SYSTEMS" IEEE JOURNAL ON SELECTED AREAS IN COMMUNICATIONS, IEEE SERVICE CENTER, PISCATAWAY, NJ, US, vol. 19, no. 8, August 2001 (2001-08), pages 1497-1506, XP001110567 ISSN: 0733-8716
- GALLI S ET AL: "Multiuser channel estmation: finding the best sparse representation of crosstalk on the basis of overcomplete dictionapies" GLOBECOM'02. 2002 - IEEE GLOBAL TELECOMMUNICATIONS CONFERENCE. CONFERENCE PROCEEDINGS. TAIPEI, TAIWAN, NOV. 17 - 21, 2002, IEEE GLOBAL TELECOMMUNICATIONS CONFERENCE, NEW YORK, NY : IEEE, US, vol. VOL. 1 OF 3, 17 November 2002 (2002-11-17), pages 1213-1217, XP010636338 ISBN: 0-7803-7632-3

## Description

### FIELD OF THE INVENTION

This invention generally relates to noise reduction in communication systems and, more particularly, to reducing cross-talk noise in DSL systems.

### BACKGROUND OF THE INVENTION

Telephone companies provide telecommunication services such as voice, xDSL (e.g. ADSL, ADSL2, ADSL2+, VDSL, VDSL2, SDSL, HDSL etc.) and the like, from a central office (CO) to customer premises equipment (CPE) via a multiconductor cable. Distribution cable pairs connect from multiconductor cable is spliced to connect the distribution cable pairs. Splices may also occur at various points along the multiconductor cable.

One of the problems associated with this type of systems is the phenomenon of cross-talk occurring between adjacent pairs in the multiconductor cable, which affect the quality of the signal received in these pairs as well as the transmission rate of xDSL traffic. Still, xDSL modems usually operate without active cross-talk cancellation of the neighboring transmitters, mainly because one or both of the following two reasons:
The first is the processing power required. xDSL modem is an intensive number-crunching machine. Additional algorithms for canceling the cross-talk would require a substantially increased number-crunching power which is either currently impractical, or, will increase cost beyond the reach of the average user.

The second reason is that to achieve effective cross-talk cancellation, the neighboring pairs of a specific xDSL must be known. Moreover, the data being transmitted by the neighboring modems should be dynamically provided to the modem where the cross-talk canceling algorithm resides in order to carry out the cancellation.

While the first reason (processing power) is being overcome as time passes with more and more powerful DSPs entering the market, still the second problem remains.

As explained above, the twisted pairs are typically aggregated into a multiconductor cable, and the major cross-talk problems will be noted from the lines that are physically adjacent to one another. Usually 3-7 pairs of adjacent lines are the major contributors to the cross talk.

US 2004/0096052 describes a method for frequency and loop length grouping for cross-talk reduction in a plurality of DSL channels. According to the method described by this reference, the plurality of subscriber loop pairs is separated into a plurality of frequency groups, each frequency group spanning a distance along the cable that requires no more than a predetermined range of power attenuation to be applied to the signals from the sites within the group to equalize signal power from each site within the group. Then, frequency bands are assigned to the frequency groups such that groups farther from the central office have lower frequency bands than groups closer to the central office. Following that step, an analog electronic lowpass filter is assigned at the central office for each frequency group, except the frequency group closest to the central office, so that each filter has a passband that provides any needed attenuation to the signals of the frequency group and a stopband that substantially attenuates frequencies from the other frequency groups.

EP 1,283,655 discloses an apparatus for adjusting the maximum bit-rate of a Digital Subscriber Line ("DSL") for maximizing DSL throughput with acceptable level of cross-talk, which comprises controllers for each DSL line, used for limiting the bit-rate along the corresponding line, where each of the controllers requests from a centralized processor, a bit-rate for a DSL controlled by that controller, and the processor is programmed to detect if bit-rates for all of the DSLs in the binder group correspond to an unacceptable level of cross-talk, and upon detecting such a situation, to reduce the bit-rate of one or more of the active DSLs out of the binder group to lower the cross-talk level to an acceptable level of cross-talk.

US 6,292,559 describes a method for determining transmission characteristics for a communications channel and for transmitting data along that communications channel. By the method described, the channel's transfer function and interference characteristics are determined for the channel. The interference characteristics include transfer functions describing the channel's susceptibility to cross talk from neighboring channels. The channel transfer function and the interference characteristics are then examined and a transmit spectrum (or power spectral density function) is constructed for the channel. The transmit spectrum uses orthogonal separation of upstream and downstream communications to increase channel capacity. This method is useable in communicating data when the channel is subject to interference from one or more other communications channels, including near-end cross talk (NEXT) and farend cross talk (FEXT), from other channels carrying the same service and/or different services.

US 5,063,351 discloses a digital signal processing relating to near-end cross-talk cable measurements. In this reference there is disclosed an arrangement of digital circuitry for testing a cable communication system to determine its performance when subjected to near-end cable cross-talk. The circuitry digitally generates a cross-talk signal indicative of the combined effect of one or more interfering sources and the near-end cross-talk coupling path linking the interfering sources with the system-under-test.

US 5,532,603 relates to cross-talk measurement apparatus with near-end compensation. According to this publication, a pulse-based cable cross-talk measurement instrument provides near-end cross talk (NEXT) information for characterizing the performance of local area network (LAN) cable systems. Accuracy of the cross-talk measurement is enhanced by measuring and mathematically removing the cross-talk effects of the near-end connector. Accuracy of the cross-talk measurement is further enhanced by conducting the cross-talk measurement with pulses of differing pulse widths selected to have increased pulse energy in frequency ranges of interest. A composite cross-talk response using the individual cross-talk responses of the individual pulse widths concatenated together is created and then compared with an industry-standard pass fail limit to provide a pass-fail decision on a LAN cable test system under test.

One solution to the prior art problems described above, is, to connect all twisted pairs associated with the same cable, to the same xDSL card at the DSLAM or at the CO. By doing that, the need for data transfer to local cards or even to the same chip-set that processes the modem algorithms of the twisted pairs, be minimized. The advantage of such a solution is that there will be no need to transfer information between different modems in different cards or even in different systems.

However, tracking twisted pairs of wires in bundles and xDSL cards is logistically very complex, as different companies or different divisions of the same company may be involved in carrying out these two functions. In addition, bundle information of old cables may not exist, twisted pairs may change several bundles along their path towards the DSLAM and it would be impossible to predict which of the twisted pairs would be, or even is, the main contributor to the cross talk. Thus, service providers are, in general, reluctant to adopt a per-card local cancellation method as described above.

### SUMMARY OF THE INVENTION

In order to solve the above-described problems, one of the objects of the present invention is to provide a device and method to allow reducing cross talk between pairs of copper wires carrying xDSL traffic.

Another object of the present invention is to provide a method and device that allow connecting an additional pair of copper wires with minimized cross-talk interferences to and/or by adjacent copper pairs, while refraining from introducing substantial interferences to the traffic conveyed along the already operative other copper pairs.

Further objects and features of the present invention will become more apparent to those skilled in the art from the following description taken together with the accompanying drawings and appended claims.

Thus, according to a first aspect of the invention there is provided a method for connecting a twisted pair conductor to a modem device selected from among a first plurality of modem devices, wherein at least one criterion for selecting that modem device is to allow the reduction of cross-talk interferences that would otherwise be induced upon traffic conveyed along that twisted pair conductor by the transmission and/or reception of traffic conveyed along other twisted pair conductors connected to other modem devices out of the first plurality of modem devices, and/or upon traffic conveyed along such other twisted pair conductors connected to other modem devices out of the first plurality of modem devices, by the transmission and/or reception of traffic conveyed along the twisted pair conductor.

According to an embodiment of the present invention, the method provided comprises the following steps:
(i) providing a communication apparatus comprising a first plurality of modem devices associated with a second plurality of electronic circuit boards, so that each of the electronic circuit boards comprises at least one modem device, and wherein each of the modem devices is capable of being communicatingly associated with at least one twisted pair conductor for conveying traffic along a telecommunication network;
(ii) providing a twisted pair conductor to be connected with a modem device associated with the communication apparatus;
(iii) connecting the twisted pair conductor with an available modem device associated with one of the second plurality of electronic circuit boards;
(iv) determining interferences to traffic transmitted and/or received by the available modem device that are induced by the remaining modem devices associated with that electronic circuit board;
(v) repeating steps (iii) and (iv) to the extent necessary, by forming a connection between the twisted pair conductor and another available modem device associated with another one of the second plurality of electronic circuit boards, in order to select a modem device associated with the twisted pair conductor and an electronic circuit board out of the second plurality of electronic circuit boards, which experiences the highest interference level that might be induced by the other modem devices associated with the electronic circuit board; and
(vi) connecting the twisted pair conductor with a modem device associated with the selected electronic circuit board.

Preferably, the method further comprising a step of applying a Near End Cross Talk (NEXT) algorithm to allow compensation of the interferences that might otherwise be experienced along the additional twisted pair conductor due to the operation of one or more of the other modem devices associated with the selected electronic circuit board.

As explained above, one way of determining which is the most suitable modem device (or in other words which is the preferred electronic circuit board that should be selected) is by measuring the interferences experienced by the modem device, once connected with the additional twisted pair conductor, where these interferences are caused by the other modems associated with the same electronic board. In the alternative or by additional embodiment of the invention, instead of using the level of interferences criterion, the criterion may be the amount of energy that may be cancelled while using an appropriate filter (preferably an adaptive filter) associated with that modem and directed to minimize the interferences observed along the additional twisted pair conductor connected to that modem device.

According to an embodiment of the invention, the selection of an electronic circuit board in accordance with step (iii) is made only from among electronic circuit boards that comprise at least one available modem device for connecting this new twisted pair conductor.

According to yet another embodiment of the invention, the interferences are such that affect the traffic conveyed via that twisted pair conductor to be connected, interferences that could be induced by one or more of the modem devices operative at the selected electronic circuit board. Optionally, or in the alternative, the interferences are interferences upon the traffic conveyed by one or more of the modem devices operative at said selected electronic circuit board that could be induced by the traffic transmitted along this additional twisted pair conductor to be connected.

In accordance with another aspect of the invention there is provided a communication device which comprises:
i. a first interface adapted to be associated with a plurality of twisted pair conductors;
ii. a second interface adapted to be associated with a plurality of electronic circuit boards, wherein each of the electronic circuit boards comprises one or more modem devices;
iii. evaluating means, adapted to evaluate the interferences caused by communicatingly connecting an additional twisted pair conductor to one or more of the plurality of the electronic circuit boards; and
iv. decision making block, adapted to select at which of said one or more electronic circuit boards, the interferences caused by communicatingly connecting the additional twisted pair conductor, are the highest.

By another embodiment of the invention, the communication device further comprises processing means adapted to affect an algorithm to allow compensation of the interferences upon the traffic conveyed via the new twisted pair conductor by one or more of the modem devices operative at the selected electronic circuit board, and/or the interferences upon the traffic conveyed by one or more of the modem devices operative at the selected electronic circuit board by the traffic transmitted along this new twisted pair conductor to be connected. Preferably, the algorithm is of the Near End Cross Talk (NEXT) type.

According to still another aspect of the invention, there is provided a communication apparatus which comprises:
i. an interface adapted to receive a plurality of twisted pair conductors;
ii. a plurality of electronic circuit boards, each comprising one or more modem devices;
iii. evaluating means, adapted to evaluate interferences to be caused by connecting an additional twisted pair conductor to a modem device associated with at least one of the plurality of said electronic circuit boards;
iv. decision making block, adapted to select at which of said one or more electronic circuit boards, the interferences that would be caused by connecting said additional twisted pair conductor, are the highest; and
v. processing means adapted to affect a Near End Cross Talk (NEXT) algorithm so as to allow compensation of the interferences that are due to be caused along said additional twisted pair conductor by the operation of one or more of the modem devices associated with said selected electronic circuit board, and the interferences that are due to be caused in the traffic conveyed by one or more of the modem devices associated with said selected electronic circuit board, due to the operation of the modem to be associated with said additional twisted pair conductor.

### BRIEF DESCRIPTION OF THE DRAWINGS

A better understanding of the present invention is obtained when the following non-limiting detailed description is considered in conjunction with the following drawings in which:
FIG. 1A and 1B illustrate schematic presentations of ways to connect twisted pair wires with respective modem devices in access systems;
FIG. 2 illustrates a schematic presentation of a matrix used for cross connecting between the twisted pairs and the modems devices;
FIG. 3 illustrates a schematic presentation of an embodiment of the invention using feedback to determine how to cross connect the twisted pairs and the modem devices;
FIG. 4A and 4B demonstrate an example of an embodiment for selecting the electronic circuit board to which the new twisted pair conductor should be connected; and
FIG. 5 is a flow chart diagram illustrating a method for carrying out the present invention.

### DETAILED DESCRIPTION OF THE INVENTION

Reference will now be made in detail to an implementation consistent with some embodiments of the present invention as illustrated in the accompanying drawings.

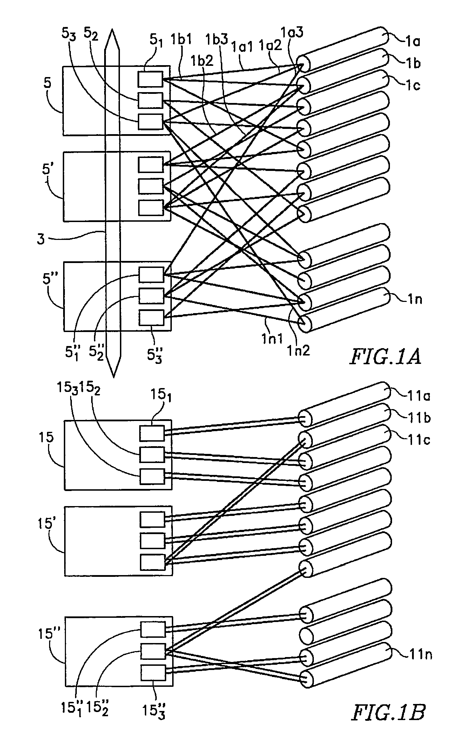

Fig. 1A presents a schematic typical system comprising a plurality of bundles 1ₐ, 1_{b}, 1_{c} ... 1ₙ, each comprising a plurality of twisted pair conductors, 1ₐ₁, 1ₐ₂, 1ₐ₃; 1_{b1}, 1_{b2}, 1_{b3}.... 1_{n1,} 1ₙ₂, 1ₙ₃, respectively. These various twisted pair conductors reach either different electronic circuit boards located at various DSLAMs or different electronic circuit boards located at the CO (5, 5' and 5") and where the present invention should be considered to encompass both applications (located at the DSLAMs and/or at the CO). Each of these electronic circuit boards comprises a number of modems 5₁, 5₂, 5₃ and so on. Now, all of the modems in this system could theoretically be interconnected by using bus 3, which should transmit all data intended to be transmitted by the modems with accurate timing. Each modem in this system would receive all data transmitted by all other modems. Once all the transmitted data is known, these modem units could theoretically cancel all cross talk resulting from all other modems, by applying the correct canceling algorithm. However, in order to be able to properly operate such a system, bus 3 would have for example to extend to all DSLAM's operative in the system. As would be appreciated by those skilled in the art, it would be rather impractical to have such an operative bus. This solution would also be impractical even from the point of the computational load that will be required to cancel that many lines which are present in such a system. One would expect that each modem may cancel a limited number (say up to about 5) of intruding modems, but that would not suffice to provide the required solution for the problem.

Fig. 1B illustrates another solution. Unlike the first solution where the twisted pairs are randomly connected to the DSLAM card, let us assume for the sake of this solution that we are able to route the twisted pair conductors in such a way that ensures that pairs belonging to a certain bundle (e.g. bundle 11ₐ) are connected to the same DSLAM card (e.g. 15₁). As long as the same cable terminates at the same modem card and not at different modem cards, the major contributors to the cross talk phenomena will reside at the same card and therefore may be cancelled locally, and consequently there would be no need for a bus as shown in Fig. 1A. By this example, two or more cables may be connected to the same card, as long as we can ensure that the same cable is terminated only at one card. As will be appreciated by those skilled in the art, although this solution may be considered as an applicable solution in systems that will have to be built from scratch, this is still impractical in typical systems that have been in operation for the reasons explained above.

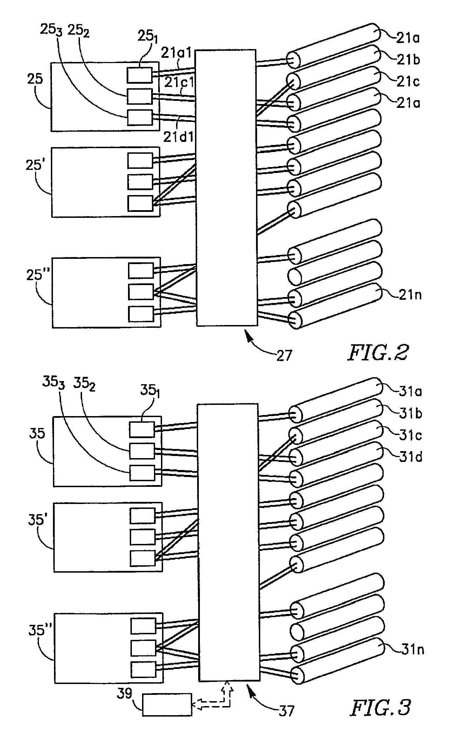

Fig. 2 presents an embodiment of the present invention to overcome some of problems previously described. By this embodiment, a cross connecting matrix 27 is used to connect the various twisted pair conductors, 21ₐ₁, 21ₐ₂, 21_{a3;} 21_{b1}, 21_{b2}, 21_{b3}.... 21ₙ₁, 21ₙ₂, 21ₙ₃ with the modems located at electronic boards 25, 25' and 25". Such a matrix can make the cross connects automatically. As long as the matrix (and means associated therewith) has no information about the cables and the cards, it would be rather difficult to envision a wise connection that could be confined to groups each comprising a number of intruding twisted pairs reaching the same modem card. However this solution may become practical if the required information is manually provided to that matrix. By this embodiment, it would be possible to confine the disturbing pairs into groups residing at the same modem card. There would be no need to the bus described above and the processing power of the DSP is also smaller, as the processing load is limited to a small number of distributing pairs.

By another embodiment of the invention, the need for manual provisioning of information which, at times can be an impractical thing to have, is eliminated. According to this embodiment, there are provided measuring means that are operative in a way exemplified herein. Let us assume that we have an already operating system. Now, a new xDSL subscriber should be connected to the system. The question is, which one of the modem cards will be the preferred card to connect this new subscriber. The choice according to the present invention is, to connect the subscriber to the card where the xDSL modems have the highest cross talk induced on the new subscriber, and vice versa, the card where the new subscriber contributes most to the cross talk of the other xDSL's modem units.

By correlating each transmitter modem with the cross-talk noise at the new twisted pair line generated by traffic conveyed along its adjacent twisted pair lines, the measuring means is capable of estimating the contribution of each transmitter to the interferences in the traffic to be conveyed along the new twisted pair conductor, so once this card is identified by the measuring means, the new twisted pair conductor will be connected to the card where most of the cross talk disturbance resides, as demonstrated in Fig. 3.

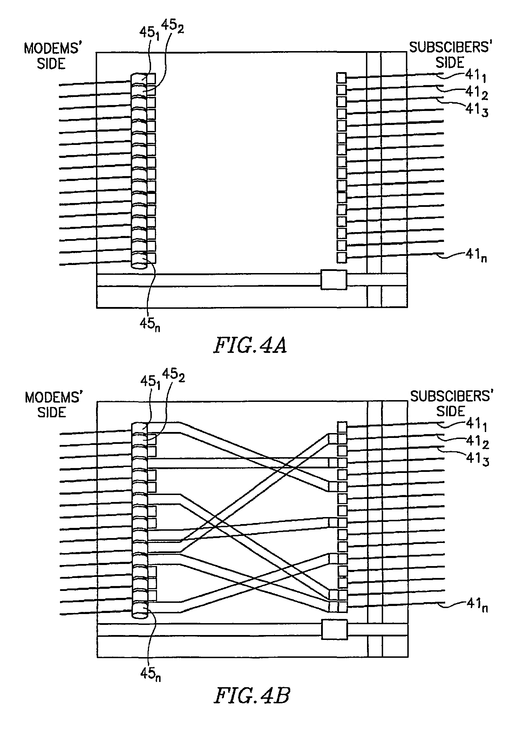

Figs. 4A and 4B illustrate an example of an embodiment of the invention for carrying out the steps for determining to which of the electronic circuit boards, should the new twisted pair conductor be connected.

The apparatus illustrated in these two Figs., comprises two basic groups:
1. The "Subscribers Group" - where the twisted pairs extending to/from the subscribers, terminate (e.g. an interface).
2. The "Equipment Group" - where the twisted pairs of the equipments terminate.

In traditional central offices (and/or street cabinets), these two groups reside in two different boards separated by e.g. approximately 1 meter. Provisioning is done by means of manual soldering of a small twisted pair (called "Jumper") between one of the subscribers and one of the equipments. However the present invention enables the use of electronic circuit boards that are shrunk to a small size and the appropriate connection could be done by automatic means such as by using a robotic arm. Fig. 4A shows the set up before carrying out the connections, while Fig. 4B illustrates this set up after partial provisioning. Usually such a set up will only be partially used, and the unused connections are kept as spare connections for new customers and future expansion.

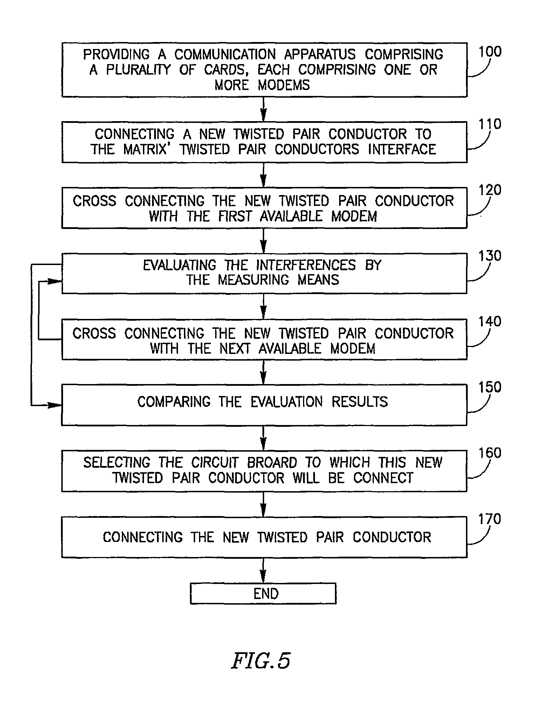

Reference is now made to Fig. 5 which is a flow chart diagram illustrating an exemplified method for reducing cross-talk interferences that otherwise would affect traffic conveyed along a twisted pair conductor to be connected to an operative system, according to an embodiment of the present invention. First, a communication apparatus is provided (step 100). This communication apparatus comprises a number of electronic circuit boards, each comprising one or more (typically a plurality of) modem devices. Each of these various modems, is connected via a cross connect matrix to a twisted pair conductor which is comprised in a bundle of a plurality of such conductors and forwarding traffic therealong towards their respective subscribers. Now, when a new twisted pair conductor is to be connected to the system, it will be connected at the twisted pair interface of the matrix (step **110**).

Then, assuming that the far end of this new twisted pair has already been connected to a subscriber's modem device, then by using an appropriate cross connecting device, a temporary connection of the new twisted pair is made with an available modem at the first circuit board out of the circuit boards connected to that matrix (step 120). There are various ways to allow such a temporary connection, e.g. the example set up depicted in Figs. 4A and 4B, where a robotic mechanism connects the new twisted pair conductor with a modem device, and repeating this process for one modem after the other, until the preferred modem device and/or the preferred electronic circuit board, is identified. Preferably, the connection is achieved by automatically and temporarily connecting a cable extending between the new twisted pair (or in fact the appropriate place at the interface to which that new twisted pair is connected) and the modem being checked. A spring may then be used to restore the cable to its initial condition upon disconnecting this temporary connection. Naturally, the available modem will be one that is preferably suited for the type of traffic to be conveyed along that new twisted pair conductor. The interferences occurring along that twisted pair conductor are evaluated (step **130**) by the measuring means connected to the matrix, and the result of the evaluation is sent to a comparator block. Next, the twisted pair conductor is disconnected from the modem with which it was previously connected and connected to the next available modem, where this next modem is preferably mounted on another circuit board (step **140**), and the process for evaluating the interferences along the conductor is carried once again. The results of each such evaluation are forwarded to a comparator block, were the level of interferences introduced by the various modems is compared (step **150**). The result of the comparison is used by a decision block that determines which of the modems introduces a substantially more cross talk interferences to the new conductor than the others (step **160**). The decision may be taken after comparing only two modems (if one of the two introduces cross talk interferences which are substantially more than the other), or at the other extreme, after going through the various modems at each of the circuit boards. Then the twisted pair conductor is then connected (step **170**) with an available modem device associated with the selected electronic circuit board (not necessarily the one used for the evaluation). After having connected this new twisted pair conductor, during its operation, a Near End Cross Talk (NEXT) algorithm will be applied to the various modems associated with the circuit board to which this new twisted pair conductor was connected, to allow compensation of the interferences that are due to be caused by the operation of one or more of these other modem devices.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

Therefore, the interferences to which the present invention relates are interferences that could be induced while conveying traffic by the one or more other operative modem devices upon the traffic conveyed via the twisted pair conductor to be added. In addition, the interferences are ones that could be induced by traffic conveyed along the twisted pair conductor to be added upon the traffic conveyed by one or more of the other operative, or the interference related to by the present invention relate to both types of interferences discussed above, as the case may be.

## Claims

1. A method for connecting a twisted pair conductor to a modem device selected from among a first plurality of modem devices, wherein at least one criterion for selecting said modem device is to allow reducing crosstalk interferences that would otherwise be induced upon traffic conveyed along said twisted pair conductor by the transmission and/or reception of traffic conveyed along other twisted pair conductors connected to other modem devices out of said first plurality of modem devices, and/or upon traffic conveyed along such other twisted pair conductors connected to other modem devices out of said first plurality of modem devices, by the transmission and/or reception of traffic conveyed along said twisted pair conductor, the method comprising the following steps: (i) providing a communication apparatus comprising a first plurality of modem devices associated with a second plurality of electronic circuit boards, so that each of the electronic circuit boards comprises at least one modem device, and wherein each of said modem devices is capable of being communicatingly associated with at least one twisted pair conductor for conveying traffic along a telecommunication network; (ii) providing a twisted pair conductor to be connected with a modem device associated with said communication apparatus; (iii) connecting said twisted pair conductor with an available modem device associated with one of said second plurality of electronic circuit boards; (iv) determining interferences to traffic transmitted and/or received by said available modem device induced by the remaining modem devices associated with said electronic circuit board; (v) repeating steps (iii) and (iv) by forming a connection between said twisted pair conductor and another available modem device associated with another one of said second plurality of electronic circuit boards to the extent necessary, in order to select a modem device associated with said twisted pair conductor and an electronic circuit board out of said second plurality of electronic circuit boards, which experiences the highest interference level that might be induced by the other modem devices associated with said electronic circuit board; and (vi) connecting said twisted pair conductor with a modem device associated with said selected electronic circuit board.

2. A method according to claim 1, further comprising a step of applying a Near End Cross Talk (NEXT) algorithm to allow compensation of interferences that are due to be caused along said twisted pair conductor by the operation of one or more of the modem devices associated with said selected electronic circuit board.

3. A method according to claim 1, wherein the step of selecting said another electronic circuit board comprises selecting said another board in accordance with the interferences level that might be introduced along said telecommunication network.

4. A communication device comprising: a) a first interface adapted to be associated with a plurality of twisted pair conductors; b) a second interface adapted to be associated with a plurality of electronic circuit boards, each comprising one or more modem devices; c) evaluating means, adapted to evaluate the interferences caused by communicatingly connecting a twisted pair conductor to one or more of the plurality of said electronic circuit boards; and d) decision making block, adapted to select at which of said one or more electronic circuit boards, the interferences caused by communicatingly connecting said twisted pair conductor, are the highest.

5. A communication device according to claim 4 , further comprising processing means, adapted to affect a Near End Cross Talk (NEXT) algorithm to allow compensation of interferences that are due to be caused along said twisted pair conductor by the operation of one or more of the modem devices associated with said selected electronic circuit board.

6. A communication apparatus according to claim 5, wherein said evaluating means is further adapted to evaluate interferences to be caused by connecting an additional twisted pair conductor to a modem device associated with any given one of the plurality of said electronic circuit boards, said decision making block is further adapted to select at which of said one or more electronic circuit boards, the interferences that would be caused by connecting said additional twisted pair conductor, are the highest and said processing means is further adapted to affect a Near End Cross Talk (NEXT) algorithm so as to allow compensation of the interferences that are due to be caused along said additional twisted pair conductor by the operation of one or more of the modem devices associated with said selected electronic circuit board, and the interferences that are due to be caused in the traffic conveyed by one or more of the modem devices associated with said selected electronic circuit board, due to the operation of the modem to be associated with said additional twisted pair conductor.

## Patentansprüche

1. Ein Verfahren zur Verbindung einer verdrillten Leitung mit einer Modemvorrichtung, gewählt aus einer ersten Vielzahl von Modemvorrichtungen, wobei mindestens ein Kriterium zur Auswahl der Modemvorrichtung es ist, die Reduzierung von Nebensprachstörungen zu ermöglichen, die ansonsten bei Verkehr induziert würden, der entlang der verdrillten Leitung übertragen wird, und zwar durch Senden und/oder Empfang von Verkehr, der entlang anderen verdrillten Leitungen übertragen wird, die mit anderen Modemvorrichtungen aus der ersten Vielzahl von Modemvorrichtungen verbunden sind, und/oder bei Verkehr, der entlang solch anderen verdrillten Leitungen übertragen wird, die mit anderen Modemvorrichtungen aus der ersten Vielzahl von Modemvorrichtungen verbunden sind, durch Senden und/oder Empfang von Verkehr, der entlang der verdrillten Leitung übertragen wird, wobei das Verfahren folgende Schritte umfasst: (i) Bereitstellung einer Kommunikationsvorrichtung, die eine erste Vielzahl von Modemvorrichtungen umfasst, welche mit einer zweiten Vielzahl elektronischer Leiterplatten verknüpft sind, so dass jede der elektronischen Leiterplatten mindestens eine Modemvorrichtung umfasst, und wobei jede der Modemvorrichtungen mit mindestens einer verdrillten Leitung kommunizierend verknüpft werden kann, um Verkehr entlang einem Telekommunikationsnetz zu übertragen; (ii) Bereitstellung einer verdrillten Leitung, die mit einer Modemvorrichtung verbunden werden soll, welche mit der Kommunikationsvorrichtung verknüpft ist; (iii) Verbinden der verdrillten Leitung mit einer verfügbaren Modemvorrichtung, die mit einer der zweiten Vielzahl elektronischer Leiterplatten verknüpft ist; (iv) Bestimmung von Störungen des Verkehrs, der von der verfügbaren Modemvorrichtung gesendet und/oder empfangen wird, induziert von den restlichen Modemvorrichtungen, die mit der elektronischen Leiterplatte verknüpft sind; (v) Wiederholung der Schritte (iii) und (iv) durch Bilden einer Verbindung zwischen der verdrillten Leitung und einer anderen verfügbaren Modemvorrichtung, die mit einer anderen der zweiten Vielzahl elektronischer Leiterplatten im notwendigen Umfang verknüpft ist, um eine Modemvorrichtung auszuwählen, die mit der verdrillten Leitung und einer elektronischen Leiterplatte der zweiten Vielzahl elektronischer Leiterplatten verknüpft ist, die dem höchsten Störgrad ausgesetzt ist, der von den anderen mit der elektronischen Leiterplatte verknüpften Modemvorrichtungen induziert werden könnte; und (vi) Verbinden der verdrillten Leitung mit einer Modemvorrichtung, die mit der ausgewählten elektronischen Leiterplatte verknüpft ist.

2. Ein Verfahren gemäß Anspruch 1, das weiter einen Schritt der Anwendung eines Nahnebensprech-(Near End Cross Talk, NEXT)-Algorithmus umfasst, um die Kompensation von Störungen zu ermöglichen, die entlang der verdrillten Leitung durch den Betrieb einer oder mehrerer der Modemvorrichtungen verursacht werden, die mit der ausgewählten elektronischen Leiterplatte verknüpft sind.

3. Ein Verfahren gemäß Anspruch 1, wobei der Schritt der Auswahl der anderen elektronischen Leiterplatte die Auswahl der anderen Platte in Übereinstimmung mit dem Störpegel umfasst, der entlang dem Telekommunikationsnetz eingeführt werden könnte.

4. Eine Kommunikationsvorrichtung, die Folgendes umfasst: a) eine erste Schnittstelle, die ausgebildet ist, um mit einer Vielzahl verdrillter Leitungen verknüpft zu werden, b) eine zweite Schnittstelle, die ausgebildet ist, um mit einer Vielzahl elektronischer Leiterplatten verknüpft zu werden, von denen jede eine oder mehrere Modemvorrichtungen umfasst, c) Auswertungsmittel, die ausgebildet sind, um die Störungen zu bewerten, die durch kommunizierende Verbindung einer verdrillten Leitung mit einer oder mehreren der Vielzahl der elektronischen Leiterplatten verursacht werden, und (d) einen Entscheidungsblock, der ausgebildet ist, um auszuwählen, bei welcher der einen oder mehreren elektronischen Leiterplatten die Störungen, die durch kommunizierende Verbindung des verdrillten Leiters verursacht werden, am höchsten sind.

5. Eine Kommunikationsvorrichtung gemäß Anspruch 4, die weiter Verarbeitungsmittel umfasst, ausgebildet, um einen Nahn-ebensprech-(Near End Cross Talk, NEXT)-Algorithmus anzupassen, um die Kompensation von Störungen zu ermöglichen, die entlang der verdrillten Leitung durch den Betrieb einer oder mehrerer der Modemvorrichtungen verursacht werden, die mit der ausgewählten elektronischen Leiterplatte verknüpft sind.

6. Eine Kommunikationsvorrichtung gemäß Anspruch 5, wobei das Auswertungsmittel weiter ausgebildet ist, um Störungen zu bewerten, die durch Verbindung einer zusätzlichen verdrillten Leitung mit einer Modemvorrichtung verursacht werden, die mit einer beliebigen aus der Vielzahl der elektronischen Leiterplatten verknüpft ist, wobei der Entscheidungsblock weiter ausgebildet ist, um auszuwählen, bei welcher der einen oder mehreren elektronischen Leiterplatten die Störungen, die durch die Verbindung der zusätzlichen verdrillten Leitung verursacht würden, am höchsten sind, und wobei das Verarbeitungsmittel weiter ausgebildet ist, um einen Nahnebensprech-(Near End Cross Talk, NEXT)-Algorithmus zu beeinflussen, um so die Kompensation der Störungen zu ermöglichen, die entlang der zusätzlichen verdrillten Leitung durch den Betrieb einer oder mehrerer der Modemvorrichtungen verursacht werden, die mit der ausgewählten elektronischen Leiterplatte verknüpft sind, und der Störungen, die in dem Verkehr verursacht werden, der von einer oder mehrerer der Modemvorrichtungen übertragen wird, welche mit der ausgewählten elektronischen Leiterplatte verknüpft sind, und zwar aufgrund des Betriebs des Modems, das mit der zusätzlichen verdrillten Leitung verknüpft werden soll.

## Revendications

1. Procédé permettant de connecter un conducteur à paire torsadée à un dispositif modem, sélectionné parmi une première pluralité de dispositifs modem, dans lequel au moins un critère pour la sélection dudit dispositif modem est de permettre une réduction des interférences par diaphonie qui, autrement, seraient induites lors d'un trafic transporté le long dudit conducteur à paire torsadée, par l'émission et/ou la réception de trafic transporté le long d'autres conducteurs à paire torsadée connectés à d'autres dispositifs modem, autres que ladite première pluralité de dispositifs modem, et/ou lors de trafic transporté le long de tels autres conducteurs à paire torsadée connectés à d'autres dispositifs modem, autres que ladite première pluralité de dispositifs modem, par l'émission et/ou la réception de trafic transporté le long dudit conducteur à paire torsadée, le procédé comprenant les étapes suivantes : (1) fourniture d'un appareil de communication comprenant une première pluralité de dispositifs modem associés à une deuxième pluralité de cartes à circuit imprimé électroniques, de manière que chacune desdites cartes à circuit imprimé électronique comprenne au moins un dispositif modem, et dans lequel chacun desdits dispositifs modem est capable d'être associé en communication avec au moins un conducteur à paire torsadée pour transporter du trafic le long d'un réseau de télécommunication ; (ii) fournir un conducteur à paire torsadée à connecter à un dispositif modem associé audit appareil de communication ; (iii) connecter ledit conducteur à paire torsadée à un dispositif modem disponible, associé à l'une de ladite pluralité de cartes à circuit imprimé électroniques ; (iv) déterminer des interférences infligées au trafic émis et/ou reçu par ledit dispositif modem disponible, induit par les dispositifs modem restants associés à ladite carte à circuit imprimé électronique ; (v) répéter les étapes (iii) et (iv) par formation d'une connexion entre ledit conducteur à paire torsadée et un autre dispositif modem disponible, associé à une autre de ladite deuxième pluralité de cartes à circuit imprimé électroniques, au degré nécessaire, de manière à sélectionner un dispositif modem associé audit conducteur à paire torsadée et à une carte à circuit imprimé électronique, autre que ladite deuxième pluralité de cartes à circuit imprimé électroniques, qui subit le niveau d'interférence maximal pouvant être induit par les autres dispositifs modem associés à ladite carte à circuit imprimé électronique ; et (vi) connecter ledit conducteur à paire torsadée, via un dispositif modem associé à ladite carte à circuit imprimé électronique sélectionnée.

2. Procédé selon la revendication 1, comprenant en outre une étape d'application d'un algorithme Near End Cross Talk (NEXT), de manière à permettre une compensation des interférences allant être provoquées le long dudit conducteur à paire torsadée par le fonctionnement d'un ou plusieurs des dispositifs modem associés à ladite carte à circuit imprimé électronique sélectionnée.

3. Procédé selon la revendication 1, dans lequel l'étape de sélection de ladite autre carte à circuit imprimé électronique comprend la sélection de ladite carte selon le niveau d'interférence risquant d'être introduit le long dudit réseau de télécommunication.

4. Dispositif de communication, comprenant: a) une première interface, adaptée pour être associée à une pluralité de conducteurs à paire torsadée ; b) une deuxième interface, adaptée pour être associée à une pluralité de cartes à circuit imprimé électroniques, chacune comprenant un ou plusieurs dispositifs modem ; c) des moyens d'évaluation, adaptés pour évaluer les interférences provoquées par la mise en liaison de communication d'un conducteur à paire torsadée avec une ou plusieurs de la pluralité desdites cartes à circuit imprimé électroniques ; et d) un bloc de prise de décision, adapté pour sélectionner à laquelle, desdites une ou plusieurs cartes à circuit imprimé électroniques, les interférences, provoquées par la mise en liaison de communication dudit conducteur à paire torsadée, sont maximales.

5. Dispositif de communication selon la revendication 4, comprenant en outre des moyens de traitement, adaptés pour appliquer un algorithme Near End Cross Talk (NEXT), pour permettre une compensation des interférences allant être provoquées le long dudit conducteur à paire torsadée par le fonctionnement d'un ou plusieurs des dispositifs modem associés à ladite carte à circuit imprimé électronique sélectionnée.

6. Appareil de communication selon la revendication 5, dans lequel lesdits moyens d'évaluation sont en outre adaptés pour évaluer des interférences allant être infligées par la connexion d'un conducteur à paire torsadée additionnel à un dispositif modem associé à l'une quelconque donnée de la pluralité desdites cartes à circuit imprimé électroniques, ledit bloc de prise de décision étant en outre adapté pour sélectionner à laquelle, desdites une ou plusieurs cartes à circuit imprimé électroniques, les interférences, provoquées par la connexion dudit conducteur à paire torsadée additionnel, sont maximales, et lesdits moyens de traitement sont en outre adaptée pour appliquer un algorithme Near End Cross Talk (NEXT), pour permettre une compensation des interférences allant être provoquées le long dudit conducteur à paire torsadée additionnel par le fonctionnement d'un ou plusieurs des dispositifs modem associés à ladite carte à circuit imprimé électronique sélectionnée, et les interférences allant être provoquées par le trafic transporté par un ou plusieurs des dispositifs modem associés à ladite carte à circuit imprimé électronique sélectionnée, du fait du fonctionnement du modem à associer audit conducteur à paire torsadée additionnel.
